# EUROPÄISCHE PATENTSCHRIFT

(11) **EP 4 398 723 B1**
(45) Veröffentlichungstag und Bekanntmachung des Hinweises auf die Patenterteilung: **17.09.2025**
(21) Anmeldenummer: 22769270.4
(22) Anmeldetag: 29.08.2022
(51) Int. Cl.: A01M 7/00

(54) **VERFAHREN ZUM BETREIBEN EINES EIN DIREKTEINSPEISESYSTEM AUFWEISENDEN LANDWIRTSCHAFTLICHEN SPRITZGERÄTS**
METHOD FOR OPERATING AN AGRICULTURAL SPRAYING DEVICE HAVING A DIRECT INFEED SYSTEM
PROCÉDÉ DE FONCTIONNEMENT D'UN DISPOSITIF DE PULVÉRISATION AGRICOLE AYANT UN SYSTÈME D'ALIMENTATION DIRECTE

(30) Priorität: 10.09.2021 DE 102021123498
(43) Veröffentlichungstag der Anmeldung: 17.07.2024
(73) Patentinhaber: Amazonen-Werke H. Dreyer SE & Co. KG, 49205 Hasbergen (DE)
(72) Erfinder: GROSSE PRUES, Frank, 49593 Bersenbrück (DE); KLEMANN, Timo, 49191 Belm (DE); KÜHN, Christoph, 49186 Bad Iburg (DE)
(86) Internationale Anmeldenummer: PCT/EP2022/073892
(87) Internationale Veröffentlichungsnummer: WO 2023/036638

(56) Entgegenhaltungen:
- EP-A1- 3 348 142
- DE-A1- 102017 220 006
- DE-A1- 102017 220 007
- US-A1- 2019 373 880

## Beschreibung

Die Erfindung betrifft ein Verfahren zum Betreiben eines ein Direkteinspeisesystem aufweisenden landwirtschaftlichen Spritzgeräts nach dem Oberbegriff des Patentanspruchs 1 und ein System zum Steuern der Ausbringung von Spritzflüssigkeit durch ein landwirtschaftliches Spritzgerät nach dem Oberbegriff des Patentanspruchs 14.

DE 10 2017 220 006 A1 offenbart ein Verfahren zum Überwachen und/oder Ändern einer Wirkmittelkonzentration in einer Spritzflüssigkeit einer Spritzvorrichtung. DE 10 2017 220 007 A1 offenbart ein Verfahren zum Überwachen einer Wirkmittelkonzentration und/oder Steuern eines Vermischungsvorgangs in einer Spritzflüssigkeit in einem Spritzflüssigkeitstank einer Spritzvorrichtung. US 2019/373880 A1 offenbart ein lokalisiertes Produkteinspritzungssystem und Verfahren dafür. EP 3 348 142 A1 offenbart ein Verfahren, Flüssigkeitskreislauf und Spritzeinrichtung zum Ausbringen einer Spritzflüssigkeit auf einer landwirtschaftlichen Fläche.

Landwirtschaftliche Spritzgeräte mit einer Direkteinspeisung können Wirkstoffe, wie beispielsweise Pflanzenschutzmittel oder Dünger, bedarfsgerecht während des Ausbringvorgangs einer Trägerflüssigkeit zudosieren. Gattungsgemäße Spritzgeräte weisen üblicherweise einen Hauptbehälter für die Trägerflüssigkeit auf. Die Trägerflüssigkeit wird den Spritzdüsen des Spritzgeräts über ein Leitungssystem zugeleitet. Zusätzlich weisen gattungsgemäße Spritzgeräte üblicherweise einen Wirkstoffbehälter für den einzudosierenden Wirkstoff auf. Diese Flüssigkeit ist in der Regel für eine direkte Applikation auf dem Feld zu hoch dosiert. Der Wirkstoff wird über eine Einspeisepumpe in ein Leitungssystem eingespeist, in welchem auch die Trägerflüssigkeit geführt wird, und mit der Trägerflüssigkeit vermischt. Die Einspeisung des Wirkstoffs kann teilflächenspezifisch erfolgen, beispielsweise unter Verwendung einer Applikationskarte.

Zwischen der Einspeisestelle der Direkteinspeisung und den Spritzdüsen befinden sich üblicherweise mehrere Meter Schlauchleitung. Wenn eine neue Wirkstoffkonzentration aufgebaut werden soll, muss also die komplette Flüssigkeit zwischen Einspeisestelle und Spritzdüsen ausgetauscht werden. Aufgrund der Leitungslänge zwischen der Einspeisestelle und den Spritzdüsen am Gestänge ergibt sich ein zeitlicher Verzug zwischen dem Ändern der Wirkstoff-Einspeiserate und dem tatsächlichen Austritt der beabsichtigten Spritzflüssigkeit mit der geänderten Wirkstoffkonzentration aus den Spritzdüsen.

Die Aufgabe der Erfindung besteht darin, den zeitlichen Versatz zwischen Einspeiseänderung und Austritt angepassten Spritzflüssigkeit aus den Ausbringelementen zu kompensieren.

Die Aufgabe wird gelöst durch ein Verfahren der eingangs genannten Art, wobei eine Steuerungseinrichtung selbsttätig das Verändern der Wirkstoffkonzentration der Spritzflüssigkeit veranlasst, bevor die Ausbringelemente eine innerhalb der landwirtschaftlichen Nutzfläche verlaufende flächeninterne Applikationsgrenze erreichen, sodass die Spritzflüssigkeit mit der veränderten Wirkstoffkonzentration bei der Erreichen der flächeninternen Applikationsgrenze an einem oder mehreren Ausbringelementen anliegt.

Dadurch, dass die Spritzflüssigkeit mit der veränderten Wirkstoffkonzentration bei Erreichen der flächeninternen Applikationsgrenze an dem einen oder den mehreren Ausbringelementen anliegt, kann die Ausbringung der Spritzflüssigkeit mit der geänderten Wirkstoffkonzentration auch direkt an der flächeninternen Applikationsgrenze erfolgen. Vorzugsweise dosiert eine Einspeisepumpe des Direkteinspeisesystems schon vorausschauend die neue Wirkstoffmenge zur Trägerflüssigkeit hinzu, sodass eine Spritzflüssigkeit mit der beabsichtigten Wirkstoffkonzentration aus dem einen oder den mehreren Ausbringelementen austritt, sobald das eine oder die mehreren Ausbringelemente die flächeninterne Applikationsgrenze überfahren.

Die Steuerungseinrichtung kann die flächeninternen Applikationsgrenzen beispielsweise aus einer Applikationskarte entnehmen und mit einer ermittelten aktuellen Position der Ausbringelemente abgleichen. Applikationskarten können unter anderem Informationen über Bereiche mit verschiedenen Soll-Ausbringmengen eines Wirkstoffs auf einer landwirtschaftlichen Nutzfläche umfassen. Die flächeninternen Applikationsgrenzen und/oder Soll-Ausbringmengen an Wirkstoff lassen sich auch direkt bei einer Überfahrt mit einem zusätzlichen Sensor an der Maschine generieren, insbesondere aus sensorisch erfassbaren Parametern der Nutzfläche und/oder auf dieser stehenden Pflanzen ermitteln. Ferner können die flächeninternen Applikationsgrenzen und/oder die Soll-Ausbringmengen an Wirkstoff vorab mit Satellitendaten, Drohnenüberflug oder Ertragsdaten ermittelt werden. In Applikationskarten kann beispielsweise hinterlegt sein, dass 500 ml Wachstumsregler pro Hektar in einem trockenen Bereich des Feldes mit schwachen Pflanzen dosiert werden sollen und 800 ml pro Hektar in einem feuchten Bereich mit starken Pflanzen.

Durch das Einspeisen des Wirkstoffs wird eine eine spezifische flächenbezogene Ausbringmenge an Wirkstoff und eine spezifische flächenbezogene Ausbringmenge an Trägerflüssigkeit umfassende Spritzflüssigkeit erzeugt. Beim Verändern der Wirkstoffkonzentration wird vorzugsweise das Verhältnis der flächenbezogenen Ausbringmenge an Wirkstoff und der flächenbezogenen Ausbringmenge an Trägerflüssigkeit verändert. Die Trägerflüssigkeit kann beispielsweise Wasser, Flüssigdünger oder eine fertig gemischte Pflanzenschutzbrühe, welche beispielsweise Wasser und Wirkstoff umfasst, sein. Die Ausbringelemente können beispielsweise Spritzdüsen sein.

In einer bevorzugten Ausführungsform des erfindungsgemäßen Verfahrens veranlasst die Steuerungseinrichtung das Verändern der Wirkstoffkonzentration der Spritzflüssigkeit an einem Anpassort auf der landwirtschaftlichen Nutzfläche und/oder zu einem Anpasszeitpunkt während eines Ausbringvorgangs. Die Steuerungseinrichtung ermittelt den Anpassort und/oder den Anpasszeitpunkt unter Berücksichtigung einer dynamischen Bereitstellungsverzögerung der Spritzflüssigkeit mit der veränderten Wirkstoffkonzentration an dem einen oder den mehreren Ausbringelementen. Die Bereitstellungsverzögerung ist abhängig von dem Durchfluss der Spritzflüssigkeit durch das Leitungssystem und/oder von Eigenschaften des Leitungssystems. Die Bereitstellungsverzögerung ist abhängig von oder entspricht der Strömungsdauer der Spritzflüssigkeit mit der veränderten Wirkstoffkonzentration von der Einspeisestelle zu dem einen oder den mehreren Ausbringelementen. Die Leitungssystemeigenschaften, von welchen die Bereitstellungsverzögerung abhängig ist, sind beispielsweise das Leitungsvolumen, die Leitungslängen und/oder die Leitungsquerschnitte.

Die aktuelle Position des Spritzgeräts und/oder der Ausbringelemente können über ein Satellitennavigationssystem, insbesondere ein GPS-System, ermittelt werden. Aus den Navigationsdaten kann auch die Fahrgeschwindigkeit des landwirtschaftlichen Spritzgeräts ermittelt werden. Alternativ oder zusätzlich kann die Fahrgeschwindigkeit des landwirtschaftlichen Spritzgeräts sensorisch ermittelt sein.

In einer bevorzugten Ausführungsform des erfindungsgemäßen Verfahrens betrifft die von der Steuerungseinrichtung ermittelte Bereitstellungsverzögerung die Verzögerungszeit zwischen dem Anpasszeitpunkt und dem Zeitpunkt, an welchem das eine oder die mehreren Ausbringelemente die flächeninterne Applikationsgrenze erreichen. Alternativ betrifft die von der Steuerungseinrichtung ermittelte Bereitstellungsverzögerung den Verzögerungsweg zwischen dem Anpassort und der flächeninternen Applikationsgrenze. Die Bereitstellungsverzögerung ist auch von der Fahrgeschwindigkeit bis zum Erreichen der flächeninternen Applikationsgrenze abhängig. Die Fahrgeschwindigkeit kann bis zum Erreichen der flächeninternen Applikationsgrenze konstant sein. Ferner kann die Fahrgeschwindigkeit bis zum Erreichen der flächeninternen Applikationsgrenze auch durch Beschleunigen oder Abbremsen verändert werden. Eine geplante Veränderung der Fahrgeschwindigkeit bis zum Erreichen der flächeninternen Applikationsgrenze wird von der Steuerungseinrichtung beim Ermitteln der Bereitstellungsverzögerung berücksichtigt.

Es ist darüber hinaus ein erfindungsgemäßes Verfahren vorteilhaft, bei welchem die Steuerungseinrichtung den Verzögerungsweg unter Berücksichtigung eines Flüssigkeitsaustauschvolumens, einer flächenbezogenen Ausbringrate an Trägerflüssigkeit oder Spritzflüssigkeit und/oder der Arbeitsbreite des Spritzgeräts bis zum Erreichen der flächeninternen Applikationsgrenze berechnet. Das Flüssigkeitsaustauschvolumen betrifft vorzugsweise das Leitungsvolumen zwischen der Einspeisestelle und den Ausbringelementen. Wenn einzelne Ausbringelemente deaktiviert sein sollten, umfasst das Flüssigkeitsaustauschvolumen nicht das Leitungsvolumen der zu den deaktivierten Ausbringelementen führenden Stichleitungen, da ein Austausch der Flüssigkeit in diesen Stichleitungen nicht erfolgt. Die Spritzflüssigkeit in dem Leitungsvolumen zum Anpasszeitpunkt oder am Anpassort muss durch die Spritzflüssigkeit mit der veränderten Wirkstoffkonzentration ausgetauscht werden, damit die Spritzflüssigkeit mit der veränderten Wirkstoffkonzentration an dem einen oder den mehreren Ausbringelementen ansteht. Beispielsweise entspricht eine flächenbezogene Ausbringrate von 200 Liter pro Hektar einer flächenbezogenen Ausbringrate von 0,02 Liter pro m². Bei einem Flüssigkeitsaustauschvolumen von 40 Litern kann mit dem Flüssigkeitsaustauschvolumen eine Fläche von 2000 m² behandelt werden. Bei einer Arbeitsbreite von 36 m beträgt der Verzögerungsweg somit ca. 55,6 m. Der Anpassort liegt also ca. 55,6 m vor der flächeninternen Applikationsgrenze.

Das erfindungsgemäße Verfahren wird ferner dadurch vorteilhaft weitergebildet, dass die Steuerungseinrichtung den Verzögerungsweg unter Berücksichtigung des Fahrwegs und entlang des Fahrwegs auftretenden Ausbringunterbrechungen bis zum Erreichen der flächeninternen Applikationsgrenze berechnet. Insbesondere bei anstehenden Kurvenfahrten oder Wendevorgängen, beispielsweise im Bereich des Vorgewendes, muss der Fahrweg bekannt sein, damit die Route bis zum Erreichen der flächeninternen Applikationsgrenze berücksichtigt werden kann. Da sich die Fahrwege auf der landwirtschaftlichen Nutzfläche bei der Ausführung unterschiedlicher Arbeitsschritte im Regelfall nicht verändern, kann der Fahrweg bei einem vorangegangenen Arbeitsschritt aufgezeichnet werden oder durch ein Planungssystem hinterlegt sein, sodass der aufgezeichnete bzw. hinterlegte Fahrweg zur Berechnung des Verzögerungswegs verwendet werden kann. Ausbringunterbrechungen können insbesondere im Bereich des Vorgewendes auftreten. Da Ausbringunterbrechungen den Austausch der Flüssigkeit innerhalb des Leitungsvolumens verzögern, sind auch diese bei der Berechnung des Verzögerungswegs zu berücksichtigen.

In einer anderen bevorzugten Ausführungsform des erfindungsgemäßen Verfahrens wird der Durchfluss, insbesondere der Durchflussvolumenstrom und/oder die Strömungsgeschwindigkeit, der Trägerflüssigkeit und/oder der Spritzflüssigkeit durch das Leitungssystem mittels einer oder mehrere Durchflussmesseinrichtungen gemessen. Die Steuerungseinrichtung berechnet die Bereitstellungsverzögerung vorzugsweise in Abhängigkeit des gemessenen Durchflusses. Durch die Messung des Durchflusses kann bei bekannten Leitungsvolumen die Zeit berechnet werden, bis eine bestimmte Menge Flüssigkeit ausgetauscht ist. Die Messung des Durchflusses kann beispielsweise durch einen Zentralsensor in einer Hauptdurchflussleitung erfolgen. Alternativ kann die Durchflussmessung über mehrere Sensoren in unterschiedlichen Leitungen erfolgen. Die Bereitstellungsverzögerung ist vorzugsweise linear abhängig vom Durchfluss, insbesondere vom Durchflussvolumenstrom und/oder von der Strömungsgeschwindigkeit der Spritzflüssigkeit. Da der Wirkstoffanteil in der Spritzflüssigkeit gering ist, kann auch der Durchfluss der Trägerflüssigkeit zur Ermittlung der Bereitstellungsverzögerung zugrunde gelegt werden. Die Durchflussmessung kann vor oder hinter der Einspeisestelle erfolgen. Bei Bedarf kann das Volumen der Einspeisung addiert oder subtrahiert werden, um so den Durchflusswert an einer anderen Position zu ermitteln.

In einer weiteren bevorzugten Ausführungsform des erfindungsgemäßen Verfahrens werden bevorstehende, insbesondere geplante, Änderungen des Durchflusses, insbesondere des Durchflussvolumenstroms und/oder der Strömungsgeschwindigkeit, der Trägerflüssigkeit und/oder der Spritzflüssigkeit durch das Leitungssystem bis zum Erreichen der flächeninternen Applikationsgrenze, insbesondere durch Auswertung einer geplanten Ausbringroutine, ermittelt. Der Durchfluss der Trägerflüssigkeit und/oder der Spritzflüssigkeit durch das Leitungssystem kann sich beispielsweise dadurch ändern, dass eine Applikationskarte in einem spezifischen Bereich der landwirtschaftlichen Nutzfläche die Ausbringung einer erhöhten Menge an Trägerflüssigkeit und/oder Spritzflüssigkeit vorsieht. Ferner kann sich der Durchfluss der Trägerflüssigkeit und/oder der Spritzflüssigkeit durch das Leitungssystem durch ein Aktivieren oder Deaktivieren von einzelnen Ausbringelementen verändern. Die Steuerungseinrichtung berechnet die Bereitstellungsverzögerung vorzugsweise in Abhängigkeit der ermittelten bevorstehenden Änderungen des Durchflusses der Trägerflüssigkeit und/oder der Spritzflüssigkeit durch das Leitungssystem bis zum Erreichen der flächeninternen Applikationsgrenze. Auf diese Weise berücksichtigt die Bereitstellungsverzögerung auch vorgesehene lokale Veränderungen der Ausbringmenge an Trägerflüssigkeit und/oder Spritzflüssigkeit. Ferner wird bei der Berechnung der Bereitstellungsverzögerung ein geplantes Aktivieren und Deaktivieren von Ausbringelementen berücksichtigt.

In einer anderen bevorzugten Ausführungsform des erfindungsgemäßen Verfahrens wird die aktuelle Fahrgeschwindigkeit erfasst. Ferner können im Rahmen des Verfahrens bevorstehende, insbesondere geplante, Änderungen der Fahrgeschwindigkeit bis zum Erreichen der flächeninternen Applikationsgrenze, insbesondere durch eine Auswertung einer geplanten Ausbringroutine, ermittelt werden. Die Ausbringroutine kann beispielsweise vorsehen, dass die Fahrgeschwindigkeit vor einem Wendevorgang reduziert und nach Ausführen des Wendevorgangs wieder erhöht wird. Ferner kann eine geplante Ausbringroutine eine Geschwindigkeitsreduzierung im Kurvenbereich oder eine Geschwindigkeitserhöhung beim Übergang auf einen gradlinigen Streckenabschnitt vorsehen. Die Steuerungseinrichtung berechnet die Bereitstellungsverzögerung vorzugsweise in Abhängigkeit der erfassten aktuellen Fahrgeschwindigkeit und/oder der ermittelten bevorstehenden Änderungen der Fahrgeschwindigkeit bis zum Erreichen der flächeninternen Applikationsgrenze. Die Fahrgeschwindigkeit und der Durchfluss entwickeln sich vorzugsweise linear zueinander. Wenn die Fahrgeschwindigkeit steigt, verringert sich die Bereitstellungsverzögerung, da für eine festgelegte Ausbringmenge pro Fläche die Ausbringmenge mit der Fahrgeschwindigkeit steigt. Wenn der Durchfluss bzw. das Leitungsvolumen oder Flüssigkeitsaustauschvolumen berücksichtigt werden, muss die Fahrgeschwindigkeit nicht zwangsläufig bei der Ermittlung der Bereitstellungsverzögerung berücksichtigt werden.

Das erfindungsgemäße Verfahren wird ferner dadurch vorteilhaft weitergebildet, dass die aktuelle Soll-Ausbringmenge an Trägerflüssigkeit und/oder Spritzflüssigkeit erfasst wird. Alternativ oder zusätzlich werden bevorstehende, insbesondere geplante, Änderungen der Soll-Ausbringmenge an Trägerflüssigkeit und/oder Spritzflüssigkeit bis zum Erreichen der flächeninternen Applikationsgrenze, insbesondere unter Auswertung einer geplanten Ausbringroutine, ermittelt. Die Steuerungseinrichtung berechnet die Bereitstellungsverzögerung vorzugsweise in Abhängigkeit der erfassten aktuellen Soll-Ausbringmenge an Trägerflüssigkeit und/oder Spritzflüssigkeit und/oder den ermittelten bevorstehenden Änderungen der Soll-Ausbringmenge an Trägerflüssigkeit und/oder Spritzflüssigkeit. Die aktuelle Soll-Ausbringmenge an Trägerflüssigkeit und/oder Spritzflüssigkeit und die bevorstehenden Änderungen bis zum Erreichen der flächeninternen Applikationsgrenze können in der Steuerungseinrichtung als Ausbringparameter hinterlegt sein oder von der Steuerungseinrichtung abgerufen werden. Wenn die Soll-Ausbringmenge steigt, verringert sich die Bereitstellungsverzögerung, da der Flüssigkeitsaustausch innerhalb des Leitungsvolumens schneller erfolgt.

In einer Weiterbildung des erfindungsgemäßen Verfahrens wird die Anzahl an aktiven Ausbringelementen und/oder die Position der aktiven Ausbringelemente in dem Leitungssystem erfasst. Aktive Ausbringelemente sind die Ausbringelemente, über welche Spritzflüssigkeit auf die landwirtschaftliche Nutzfläche ausgebracht wird. Das Spritzgerät kann beispielsweise über individuell oder gruppenweise schaltbare Ausbringelemente verfügen. Beispielsweise weist das Spritzgerät eine Teilbreitenschaltung auf. Vorzugsweise erfolgt ein Ermitteln von bevorstehenden, insbesondere geplanten, Änderungen hinsichtlich der Anzahl an aktiven Ausbringelementen und/oder der Position der aktiven Ausbringelemente in dem Leitungssystem bis zum Erreichen der flächeninternen Applikationsgrenze, insbesondere durch Auswertung einer geplanten Ausbringroutine. Die Steuerungseinrichtung berechnet die Bereitstellungsverzögerung vorzugsweise in Abhängigkeit der erfassten Anzahl an aktiven Ausbringelementen und/oder der Position der aktiven Ausbringelemente in dem Leitungssystem und/oder der bevorstehenden Änderungen hinsichtlich der Anzahl an aktiven Ausbringelementen und/oder der Position der aktiven Ausbringelemente in dem Leitungssystem bis zum Erreichen der flächeninternen Applikationsgrenze. Wenn die Anzahl der aktiven Ausbringelemente steigt, verringert sich die Bereitstellungsverzögerung, da die Zeitdauer für den Austausch der Flüssigkeit in dem Leitungsvolumen reduziert wird. Wenn der Durchfluss berücksichtigt wird, muss die Anzahl an aktiven Ausbringelementen nicht zwangsläufig bei der Ermittlung der Bereitstellungsverzögerung berücksichtigt werden.

In Bezug auf Ausbringelemente, die in der Mitte des Gestänges angeordnet sind bzw. in Bezug auf eine Teilbreite, die in der Mitte des Gestänges angeordnet ist, ergibt sich aufgrund der kürzeren Leitungslänge zwischen Einspeisestelle und Ausbringelementen eine kürzere Bereitstellungsverzögerung als in Bezug auf Ausbringelemente, welche sich außen am Gestänge befinden bzw. eine Teilbreite, die sich außen am Gestänge befindet. Die Anzahl an aktiven Ausbringelementen und/oder die Positionen der aktiven Ausbringelemente in dem Leitungssystem und/oder die bevorstehende Änderung hinsichtlich der Anzahl an aktiven Ausbringelementen und/oder der Position der aktiven Ausbringelemente in dem Leitungssystem bis zum Erreichen der flächeninternen Applikationsgrenze können in der Steuerungseinrichtung als Ausbringparameter hinterlegt sein oder von der Steuerungseinrichtung abgerufen werden.

Bei Kurvenfahrten können die Ausbringelemente unterschiedliche Kurvenbahnen mit unterschiedlichen Kurvengeschwindigkeiten zurücklegen. Die unterschiedlichen Kurvenbahnen und/oder Kurvengeschwindigkeiten der Ausbringelemente und/oder ein kurvenindikatives Signal, insbesondere eine sensorisch erfasste Drehrate, können bei der Ermittlung der Bereitstellungsverzögerung berücksichtigt werden.

Das Direkteinspeisesystem kann auch mehrere Einspeisestellen aufweisen, wobei jede Einspeisestelle einer Einspeiseteilbreite mit mehreren Ausbringelementen zugeordnet ist. Ist nur eine Einspeiseteilbreite von mehreren Einspeiseteilbreiten aktiv, ist der Flüssigkeitsaustausch deutlich geringer, als wenn alle Einspeiseteilbreiten aktiv sind. Dadurch erhöht sich auch die Bereitstellungsverzögerung bei einer Veränderung der Wirkstoffkonzentration deutlich.

Die Bereitstellungsverzögerung kann außerdem abhängig davon berechnet werden, welche Teilbreiten aktiv sind. Der Flüssigkeitsaustausch an außenliegenden Teilbreiten dauert länger als der Flüssigkeitsaustausch an innen- bzw. mittig liegenden Teilbreiten.

Beträgt die aktuelle Bereitstellungsverzögerung 20s und in 20s soll eine höhere Konzentration an den Ausbringelementen anstehen. Nach 10s wird die Anzahl der aktiven Ausbringelemente und/oder die Soll-Ausbringmenge verdoppelt. Die Bereitstellungsverzögerung halbiert sich dann auf 10s bzw. 5s, wenn sowohl die Anzahl der Ausbringelemente als auch die Soll-Ausbringmenge verdoppelt wird. Wenn bei der Einspeisung nun eine Bereitstellungsverzögerung von 20s berücksichtigt worden wäre, wäre mit der Einspeisung zu früh begonnen worden. Mit den vorausschauenden Informationen über die zukünftigen Prozessparameter, welche die Bereitstellungsverzögerung beeinflussen, kann der Einspeisefehler also reduziert oder verhindert werden. Die Berechnung gilt in analoger Weise, wenn sich die Bereitstellungsverzögerung in wenigen Metern erhöht und die Einspeisung dadurch früher beginnen muss.

Es ist ferner ein erfindungsgemäßes Verfahren bevorzugt, bei welchem die flächeninterne Applikationsgrenze, der Anpassort, der Anpasszeitpunkt, die Bereitstellungsverzögerung, insbesondere als Verzögerungszeit oder Verzögerungsweg, mittels einer elektronischen Anzeigeeinrichtung, insbesondere im Zusammenhang mit einer Kartenansicht visualisiert werden. Durch die Visualisierung dieser Parameter kann der Maschinenbediener die bevorstehende Ausbringroutine gegenprüfen und ggf. Einschreiten, wenn aufgrund von Umständen, die die Steuerungseinrichtung nicht berücksichtigt, eine abweichende Ausbringung umgesetzt werden soll.

Es ist ferner ein erfindungsgemäßes Verfahren vorteilhaft, bei dem festgelegt wird, ob ein Wirkstoff oder höhere oder niedrigere Wirkstoffkonzentrationen priorisiert werden sollen. In Abhängigkeit dieser Priorisierung wird sichergestellt, dass die priorisierte Wirkstoffkonzentration an der feldinternen Applikationsgrenze ausgebracht wird. Dadurch kann es erforderlich sein, dass beispielsweise für eine Erhöhung der Wirkstoffkonzentration eine andere Bereitstellungsverzögerung ermittelt wird, als für eine Verringerung der Wirkstoffkonzentration. Die Priorisierung eines Wirkstoffs oder einer höheren oder niedrigeren Wirkstoffkonzentration kann bei der Ermittlung der Bereitstellungsverzögerung berücksichtigt werden.

Es ist ferner ein erfindungsgemäßes Verfahren vorteilhaft, bei welchem die Spritzflüssigkeit mit der veränderten Wirkstoffkonzentration die Ausbringelemente des Spritzgeräts aufgrund voneinander abweichender, zu den Ausbringelementen führender Leitungslängen zeitlich beabstandet erreicht, wobei die Steuerungseinrichtung dazu eingerichtet ist, eine ermittelte Bereitstellungsverzögerung zur Anpassung der Überdeckung zwischen Soll-Ausbringfläche für die Spritzflüssigkeit mit der geänderten Wirkstoffkonzentration und Ist-Ausbringfläche der Spritzflüssigkeit mit der geänderten Wirkstoffkonzentration zu manipulieren. Beispielsweise ergeben sich voneinander abweichende Bereitstellungsverzögerungen in Bezug auf die jeweiligen Ausbringelemente. Der Bediener kann die Überdeckung über eine Eingabe vorgeben, um so die Manipulation der Bereitstellungsverzögerung zu beeinflussen.

Es ist ferner ein erfindungsgemäßes Verfahren bevorzugt, bei welchem die Steuerungseinrichtung die Bereitstellungsverzögerung bei Erhöhung der Wirkstoffkonzentration anders manipuliert als bei einer Verringerung der Wirkstoffkonzentration. Je nachdem, ob höhere oder niedrigere Wirkstoffkonzentrationen priorisiert werden sollen, kann die ermittelte Bereitstellungsverzögerung verkürzt oder verlängert werden. Zum Start der Ausbringung der Spritzflüssigkeit auf die landwirtschaftliche Nutzfläche kann beispielsweise ein Zustand eingestellt werden, bei dem Wirkstoff in der beabsichtigten Konzentration an den Ausbringelementen anliegt. Die initial erforderliche Wirkstoffkonzentration kann beispielsweise aus einer Applikationskarte entnommen werden.

Das landwirtschaftliche Spritzgerät kann im Rahmen des Verfahrens beispielsweise Informationen mit einem Task-Controller austauschen. Die Steuerungseinrichtung kann Bestandteil des Task-Controllers sein. Beispielsweise informiert das landwirtschaftliche Spritzgerät den Task-Controller über das Volumen der auszutauschenden Flüssigkeit im Leitungssystem bis an den Ausbringelementen eine Spritzflüssigkeit mit einer veränderten Wirkstoffkonzentration anliegt. Der Task-Controller kann diese Information bei seinen Berechnungen berücksichtigen und flüssigkeitsaustauschvolumenspezifische Einstellparameter an das landwirtschaftliche Spritzgerät übermitteln. Hierzu können Informationen über die beabsichtigten Soll-Mengen und/oder über beabsichtigte Wirkstoffverhältnisse zwischen dem Task-Controller und dem landwirtschaftlichen Spritzgerät ausgetauscht werden. Im Rahmen einer Steuerung und/oder Regelung werden die Ist-Mengen und/oder Wirkstoffverhältnisse von Trägerflüssigkeit und/oder Spritzflüssigkeit und/oder Wirkstoffe an die jeweiligen Soll-Mengen und/oder beabsichtigen Wirkstoffverhältnisse angepasst.

Die der Erfindung zugrundeliegende Aufgabe wird ferner durch ein System der eingangs genannten Art gelöst, wobei die Steuerungseinrichtung des erfindungsgemäßen Systems dazu eingerichtet ist, selbsttätig das Verändern der Wirkstoffkonzentration der Spritzflüssigkeit zu veranlassen, bevor die Ausbringelemente eine innerhalb einer landwirtschaftlichen Nutzfläche verlaufende flächeninterne Applikationsgrenze erreichen, sodass die Spritzflüssigkeit mit der veränderten Wirkstoffkonzentration bei Erreichen der flächeninternen Applikationsgrenze an einem oder mehreren Ausbringelementen anliegt.

In einer besonders bevorzugten Ausführungsform ist das erfindungsgemäße System dazu eingerichtet, das Direkteinspeisesystem gemäß einem Verfahren nach einer der vorstehenden Ausführungsformen zu betreiben. Hinsichtlich der Vorteile und Modifikationen des erfindungsgemäßen Systems wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Systems zum Steuern der Ausbringung von Spritzflüssigkeit in einer schematischen Darstellung;
- Fig. 2: die Ausbringung von Spritzflüssigkeit auf eine landwirtschaftliche Nutzfläche in einer schematischen Darstellung;
- Fig. 3: die Ausbringung von Spritzflüssigkeit auf eine landwirtschaftliche Nutzfläche in einer schematischen Darstellung;
- Fig. 4: eine unter Berücksichtigung einer eine flächenspezifische Wirkstoffkonzentration vorgebenden Applikationskarte mittels des erfindungsgemäßen Verfahrens umgesetzte Spritzflüssigkeitsverteilung auf einer landwirtschaftlichen Nutzfläche in einer schematischen Darstellung;
- Fig. 5: eine unter Berücksichtigung einer eine flächenspezifische Wirkstoffkonzentration vorgebenden Applikationskarte mittels des erfindungsgemäßen Verfahrens umgesetzte Spritzflüssigkeitsverteilung auf einer landwirtschaftlichen Nutzfläche in einer schematischen Darstellung;
- Fig. 6: eine unter Berücksichtigung einer eine flächenspezifische Wirkstoffkonzentration vorgebenden Applikationskarte mittels des erfindungsgemäßen Verfahrens umgesetzte Spritzflüssigkeitsverteilung auf einer landwirtschaftlichen Nutzfläche in einer schematischen Darstellung;
- Fig. 7: eine unter Berücksichtigung einer eine flächenspezifische Wirkstoffkonzentration vorgebenden Applikationskarte mittels des erfindungsgemäßen Verfahrens umgesetzte Spritzflüssigkeitsverteilung auf einer landwirtschaftlichen Nutzfläche in einer schematischen Darstellung; und
- Fig. 8: eine unter Berücksichtigung einer flächenspezifische Wirkstoff- und Trägerflüssigkeitsmengen vorgebenden Applikationskarte mittels des erfindungsgemäßen Verfahrens umgesetzte Spritzflüssigkeitsverteilung auf einer landwirtschaftlichen Nutzfläche in einer schematischen Darstellung.

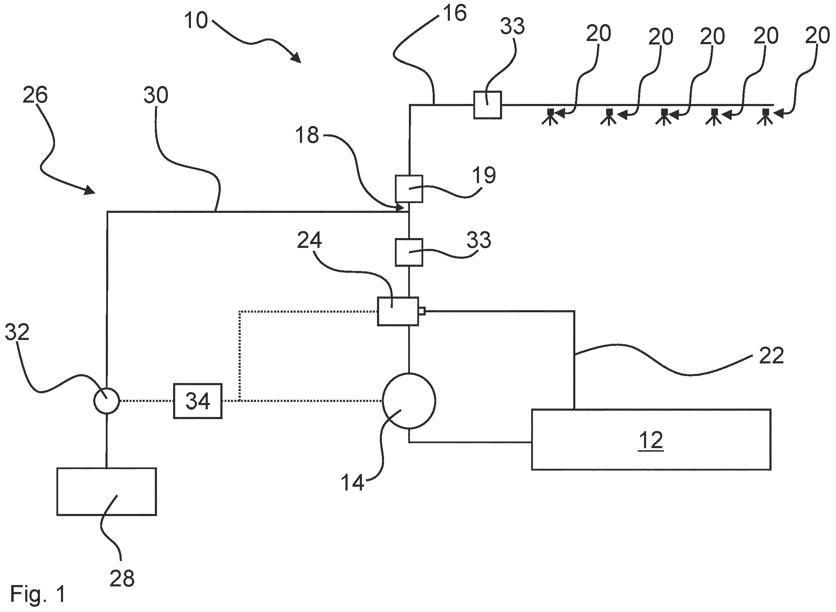

Die Fig. 1 zeigt ein System 10 zum Steuern der Ausbringung von Spritzflüssigkeit durch ein landwirtschaftliches Spritzgerät 36. Das System 10 umfasst einen Hauptbehälter 12, welcher Bestandteil des landwirtschaftlichen Spritzgeräts 36 ist und in welchem Trägerflüssigkeit bevorratet wird. Die Trägerflüssigkeit wird mittels einer Hauptpumpe 14 und eines Leitungssystems 16 über eine Einspeisestelle 18 zu Ausbringelementen 20 des landwirtschaftlichen Spritzgeräts 36 gefördert. Die Ausbringelemente 20 sind Spritzdüsen, welche an einem Gestänge 38 des Spritzgeräts 36 angeordnet sind. Mehrere Ausbringelemente 20 können zu Teilbreiten zusammengefasst sein. Zum Unterbrechen bzw. zur Steuerung der Ausbringung der Spritzflüssigkeit können in oder vor den Ausbringelementen 20 Ventile angeordnet sein, über welchen der Durchfluss der Spritzflüssigkeit durch die einzelnen Ausbringelemente 20 unterbrochen bzw. gesteuert werden kann. Das Leitungssystem 16 umfasst ferner eine Rückführleitung 22, über welche von der Hauptpumpe 14 geförderte Trägerflüssigkeit zurück in den Hauptbehälter 12 geleitet werden kann. Hierzu umfasst das Leitungssystem 16 ein Rückführventil 24, über welches die Trägerflüssigkeit wahlweise zur Einspeisestelle 18 oder über die Rückführleitung 22 zurück in den Hauptbehälter 12 geleitet werden kann.

Darüber hinaus umfasst das System 10 ein Direkteinspeisesystem 26, mittels welchem ein Wirkstoff in das die Trägerflüssigkeit führende Leitungssystem 16 einspeisbar ist. Die Einspeisung des Wirkstoffs erfolgt an der Einspeisestelle 18. Das Direkteinspeisesystem 26 umfasst einen Wirkstoffbehälter 28 zur Bevorratung des einzudosierenden Wirkstoffs. Der Wirkstoff wird über die Einspeisepumpe 32 und die Einspeiseleitung 30 zur Einspeisestelle 18 gefördert. In einer der Einspeisestelle 18 nachfolgenden Mischkammer 19 werden Wirkstoff und Trägerflüssigkeit miteinander vermischt.

Die Hauptpumpe 14 und die Einspeisepumpe 32 sind mit einer Steuerungseinrichtung 34 verbunden, über welche die Förderleistung der Hauptpumpe 14 und der Einspeisepumpe 32 gesteuert werden kann. Über das Steuern der Förderleistung der Hauptpumpe 14 und der Einspeisepumpe 32 kann die Wirkstoffkonzentration K1, K2 der Spritzflüssigkeit durch Anpassen der Wirkstoffeinspeisung und durch Anpassen des Volumenstroms der Trägerflüssigkeit an der Einspeisestelle 18 verändert werden. Die Steuerungseinrichtung 34 kann aus mehreren Modulen bestehen.

Zwischen der Einspeisestelle 18 und den als Spritzdüsen ausgebildeten Ausbringelementen 20 befinden sich mehrere Meter Schlauchleitung. Wenn eine neue Wirkstoffkonzentration K1, K2 aufgebaut werden soll, muss die komplette Flüssigkeit zwischen Einspeisestelle 18 und Ausbringelementen 20 ausgetauscht werden. Die Steuerungseinrichtung 34 berücksichtigt den sich aus der Leitungslänge ergebenden zeitlichen Verzug zwischen dem Ändern der Wirkstoff-Einspeiserate und dem tatsächlichen Austritt der beabsichtigten Spritzflüssigkeit an den Ausbringelementen 20. Die Steuerungseinrichtung 34 veranlasst selbsttätig das Verändern der Wirkstoffkonzentration K1, K2 der Spritzflüssigkeit, bevor die Ausbringelemente 20 eine innerhalb einer landwirtschaftlichen Nutzfläche N verlaufende flächeninterne Applikationsgrenze G, G', G1-G8 erreichen, sodass die Spritzflüssigkeit mit der veränderten Wirkstoffkonzentration K1, K2 bei Erreichen der flächeninternen Applikationsgrenze G, G', G1-G8 an einem oder mehreren Ausbringelementen 20 anliegt.

Dadurch, dass die Spritzflüssigkeit mit der veränderten Wirkstoffkonzentration K1, K2 bei Erreichen der flächeninternen Applikationsgrenze G, G', G1-G8 an dem einen oder den mehreren Ausbringelementen 20 anliegt, kann die Ausbringung der Spritzflüssigkeit mit der veränderten Wirkstoffkonzentration K1, K2 direkt an der flächeninternen Applikationsgrenze G, G', G1-G8 erfolgen. Die Einspeisepumpe 32 des Direkteinspeisesystems 26 dosiert vorausschauend die erforderliche Wirkstoffmenge zur Trägerflüssigkeit hinzu, sodass die Spritzflüssigkeit mit der beabsichtigten Wirkstoffkonzentration K1, K2 aus dem einen oder den mehreren Ausbringelementen 20 austritt, sobald die Ausbringelemente 20 die flächeninterne Applikationsgrenze G, G', G1-G8 überfahren.

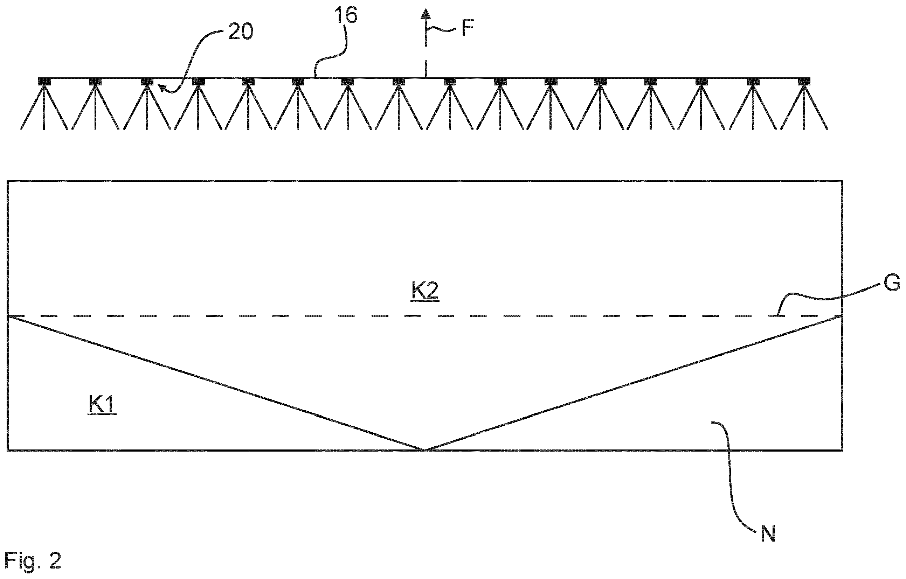

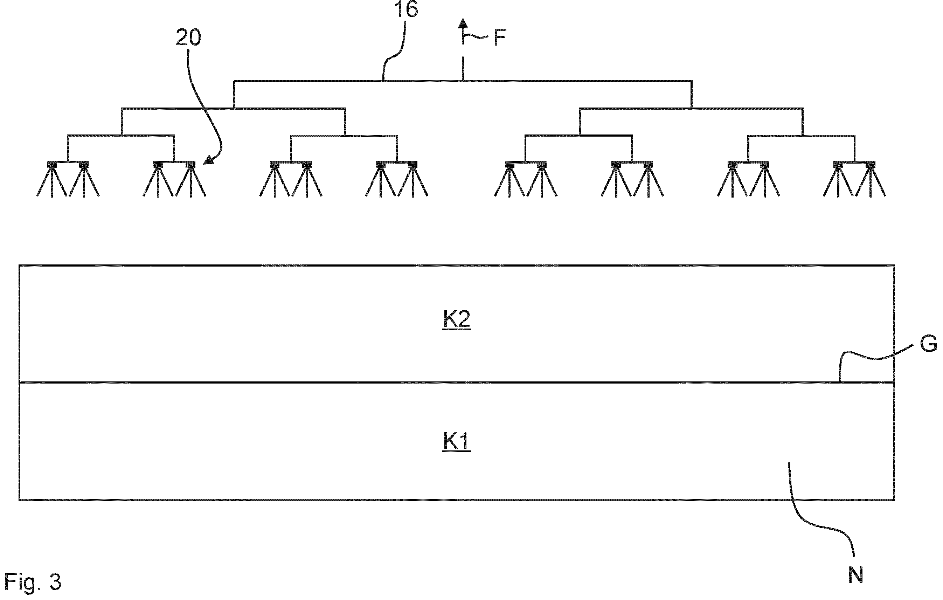

Die Fig. 2 und 3 zeigen, dass der Aufbau des Leitungssystems 16 und die Integration der Ausbringelemente 20 in das Leitungssystem 16 einen erheblichen Einfluss auf die Wirkstoffverteilung auf der landwirtschaftlichen Nutzfläche N haben.

Bei einer vorausschauenden Eindosierung des Wirkstoffs durch die Einspeisepumpe 32 des Direkteinspeisesystems 26 vor Erreichen der Applikationsgrenze G ergibt sich bei einer konstanten Vorwärtsbewegung in Fahrtrichtung F ein V-förmiger Übergangsbereich zwischen dem Flächensegment, in welchem eine Spritzflüssigkeit mit der Wirkstoffkonzentration K1 auf die landwirtschaftliche Nutzfläche N ausgebracht wurde, und dem Flächensegment, in dem eine Spritzflüssigkeit mit der Wirkstoffkonzentration K2 auf die landwirtschaftliche Nutzfläche N ausgebracht wurde, wenn die Leitungslänge zwischen der Einspeisestelle 18 und den Ausbringelementen 20 von der Positionierung der Ausbringelemente 20 abhängig ist. In Fig. 2 sind die Leitungen zu den im Außenbereich angeordneten Ausbringelementen 20 länger ist als die Leitungen zu den in der Gestängemitte angeordneten Ausbringelementen 20.

Die Fig. 3 zeigt ein Leitungssystem 16, bei welchem die Leitungslänge zwischen der Einspeisestelle 18 und den jeweiligen Ausbringelementen 20 aufgrund einer Baumstruktur übereinstimmt. Durch ein entsprechendes Leitungssystem 16 ist es möglich, die V-förmige Wirkstoffverteilung auf der landwirtschaftlichen Nutzfläche N zu vermeiden, sodass sich ein senkrecht zur Fahrtrichtung F verlaufender Übergangsbereich zwischen dem Flächensegment, in welchem die Spritzflüssigkeit die Wirkstoffkonzentration K1 aufweist, und dem Flächensegment, in welchem die Spritzflüssigkeit die Wirkstoffkonzentration K2 aufweist, ergibt.

Zwischen den Ausführungen der Fig. 2 und 3 kann es verschiedene Zwischenstufen geben. Die Ausführung nach Fig. 2 ist beispielsweise einfach und kostengünstig, weist aber einen ausgedehnten Übergangsbereich auf. Durch die Ausführung nach Fig. 3 kann dieser Übergangsbereich vermieden werden, es ist aber ein längeres Leitungssystem 16 erforderlich. Eine bevorzugte Zwischenstufe kann daher auf einen Kompromiss zwischen Leitungslänge und Übergangsbereich optimiert sein.

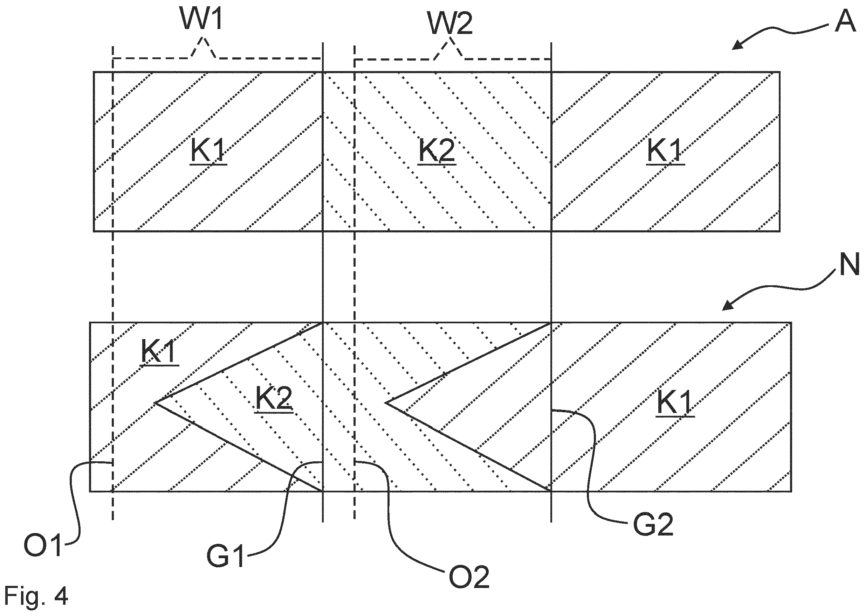

Die Fig. 4 zeigt im oberen Bereich eine Applikationskarte A, wobei die Steuerungseinrichtung 34 auf Grundlage der Applikationskarte A eine vorausschauende Änderung der Wirkstoffkonzentration K1, K2 der Spritzflüssigkeit veranlasst.

Die Steuerungseinrichtung 34 veranlasst das Verändern der Wirkstoffkonzentration K1, K2 der Spritzflüssigkeit bereits an den Anpassorten O1, O2 auf der landwirtschaftlichen Nutzfläche N, wobei die Anpassorte O1, O2 vor den entsprechenden flächeninternen Applikationsgrenzen G1, G2 liegen. Die Steuerungseinrichtung 34 ermittelt die Anpassorte O1, O2 unter Berücksichtigung einer dynamischen Bereitstellungsverzögerung der Spritzflüssigkeit mit der veränderten Wirkstoffkonzentration K1, K2 an den Ausbringelementen 20.

Die Bereitstellungsverzögerung ist abhängig von dem Durchfluss der Spritzflüssigkeit durch das Leitungssystem 16 und entspricht der Strömungsdauer der Spritzflüssigkeit mit der veränderten Wirkstoffkonzentration K1, K2 von der Einspeisestelle 18 zu den Ausbringelementen 20. Die von der Steuerungseinrichtung 34 ermittelten Bereitstellungsverzögerungen können beispielsweise die Verzögerungswege W1, W2 zwischen den Anpassorten O1, O2 und den flächeninternen Applikationsgrenzen G1, G2 betreffen. Alternativ können die Bereitstellungsverzögerungen auch die Verzögerungszeiten zwischen den Anpasszeitpunkten und den Zeitpunkten, an welchen eine oder mehrere Ausbringelemente 20 die flächeninternen Applikationsgrenzen G1, G2 erreichen, betreffen.

Aufgrund der Struktur des Leitungssystems 16 ergibt sich auch bei einer vorausschauenden frühzeitigen Änderung der Einspeisemenge an Wirkstoff ein V-förmiger Übergangsbereich zwischen den Flächensegmenten mit den unterschiedlichen Wirkstoffkonzentrationen K1, K2. Die Steuerungseinrichtung 34 steuert die Einspeisepumpe 32 so an, dass die neue Wirkstoffkonzentration K1, K2 bei Erreichen der flächeninternen Applikationsgrenzen G1, G2 an sämtlichen Ausbringelementen 20 anliegt.

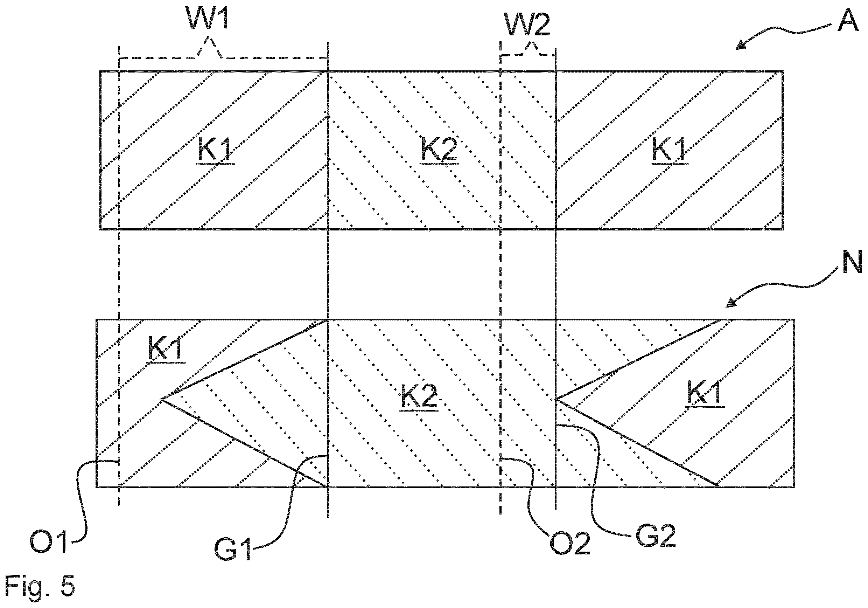

Bei dem in der Fig. 5 dargestellten Ausbringvorgang ermittelt die Steuerungseinrichtung 34 die Bereitstellungsverzögerung bei einer Erhöhung der Wirkstoffkonzentration K1, K2 anders als bei einer Verringerung der Wirkstoffkonzentration K1, K2. Bei einer Erhöhung der Wirkstoffkonzentration von K1 auf K2 berechnet die Steuerungseinrichtung 34 die Bereitstellungsverzögerung so, dass bei Erreichen der Applikationsgrenze G1 an sämtlichen Ausbringelementen 20 die Wirkstoffkonzentration K2 anliegt. Bei einer Verringerung der Wirkstoffkonzentration von K2 auf K1 berechnet die Steuerungseinrichtung 34 die Bereitstellungsverzögerung so, dass bei Erreichen der Applikationsgrenze G2 die Wirkstoffkonzentration K1 zunächst nur an einer oder mehreren zentralen Ausbringelementen 20 anliegt, also an den Ausbringelementen 20, bei welchen die Leitungslänge zwischen Einspeisestelle 18 und Ausbringelement 20 minimal ist. Es ergeben sich somit voneinander abweichende Verzögerungswege W1, W2. Eine derartige Steuerungsroutine ist vorteilhaft, wenn die höhere Wirkstoffkonzentration K2 priorisiert gegenüber der niedrigeren Wirkstoffkonzentration K1 ist. Über eine Steuerungseinrichtung 34 kann ein Benutzer beispielsweise angeben, ob eine höhere oder niedrigere Wirkstoffkonzentration K1, K2 priorisiert werden soll, sodass die Steuerungseinrichtung 34 eine Verkürzung oder Verlängerung der Bereitstellungsverzögerung zur Umsetzung der beabsichtigten Priorisierung berücksichtigen kann.

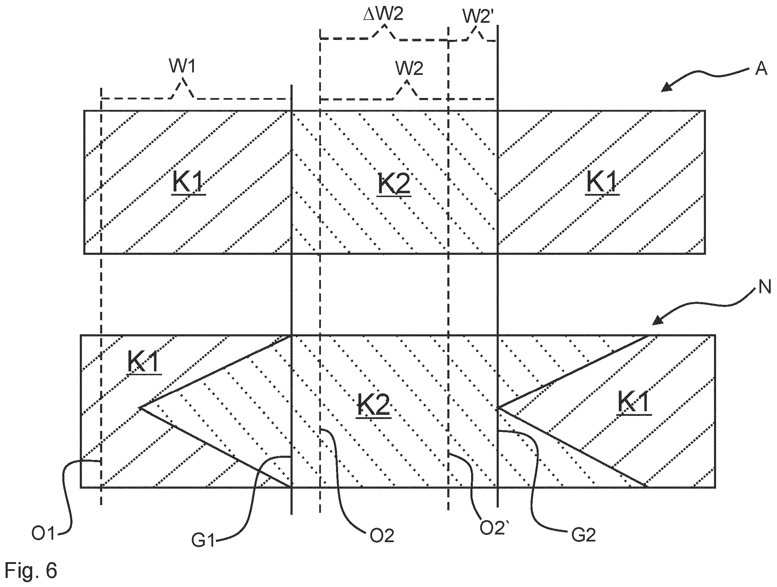

Bei dem in der Fig. 6 dargestellten Ausbringvorgang manipuliert die Steuerungseinrichtung 34 eine Bereitstellungsverzögerung zur Anpassung der Überdeckung zwischen Soll-Ausbringfläche für die Spritzflüssigkeit mit der geänderten Wirkstoffkonzentration K1, K2 und der Ist-Ausbringfläche der Spritzflüssigkeit mit der geänderten Wirkstoffkonzentration K2. Durch die Manipulation der Bereitstellungsverzögerung wird der Anpassort O2, an welchem die Steuerungseinrichtung 34 das Verändern der Wirkstoffkonzentration K1, K2 der Spritzflüssigkeit veranlasst, um eine Wegdifferenz ΔW2 an den manipulierten Anpassort O2' verschoben, sodass sich ein manipulierter Verzögerungsweg W2' ergibt.

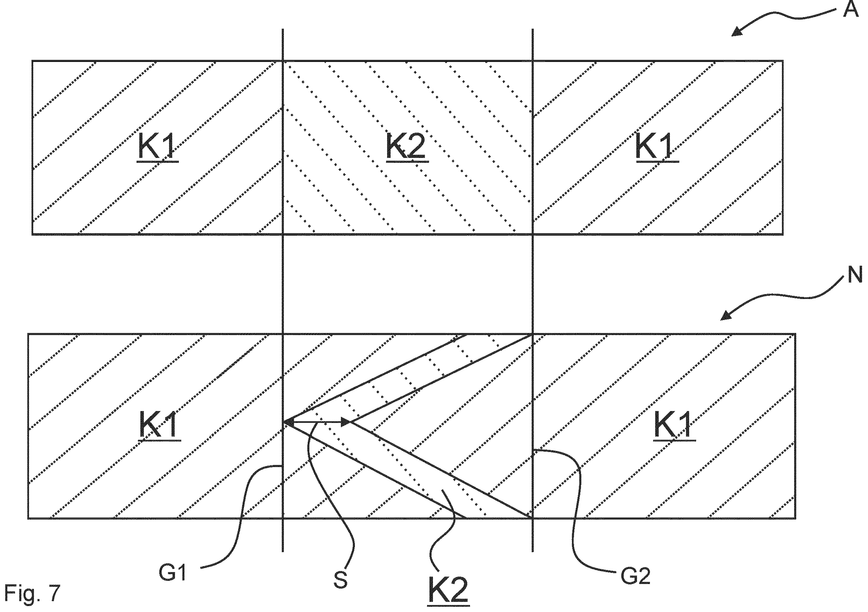

Die Fig. 7 zeigt einen Ausbringvorgang, bei welchem die Steuerungseinrichtung 34 eine Priorisierung der niedrigeren Wirkstoffkonzentration K1 berücksichtigt. Bei Erreichen der Applikationsgrenze G1 liegt lediglich an dem Ausbringelement mit der geringsten Leitungslänge zur Einspeisestelle 18 die höhere Wirkstoffkonzentration K2 an. An der flächeninternen Applikationsgrenze G2 liegt an sämtlichen Ausbringelementen 20 die Wirkstoffkonzentration K1 an.

Die Steuerungseinrichtung 34 kann den Verzögerungsweg W1, W2 in den zuvor beschriebenen Ausbringsituationen beispielsweise unter Berücksichtigung eines Flüssigkeitsaustauschvolumens berechnen, welches das Leitungsvolumen zwischen der Einspeisestelle 18 und den Ausbringelementen 20 betrifft. Ferner kann die Steuerungseinrichtung 34 eine flächenbezogene Ausbringrate an Trägerflüssigkeit oder Spritzflüssigkeit und die Arbeitsbreite des Spritzgeräts 36 bis zum Erreichen der flächeninternen Applikationsgrenzen G1, G2 berücksichtigen.

Es kann vorkommen, dass eine nicht priorisierte Wirkstoffkonzentration K1, K2 nur für eine kurze Wegstrecke S bzw. einen kurzen Zeitraum ausgebracht wird. Unterschreitet diese Wegstrecke S bzw. Zeitdauer einen einstellbaren Grenzwert, kann festgelegt werden, auf eine Änderung der Wirkstoffkonzentration zu verzichten. Der Grenzwert kann ähnliche Abhängigkeiten haben, wie die Bereitstellungsverzögerung. Er kann zusätzlich von den Wirkstoffen und/oder der Trägerflüssigkeit abhängen.

In den gezeigten Beispielen kann ferner mittels einer oder mehrerer Durchflussmesseinrichtungen 33 der Durchfluss, beispielsweise der Durchflussvolumenstrom und/oder die Strömungsgeschwindigkeit, der Trägerflüssigkeit und/oder Spritzflüssigkeit durch das Leitungssystem 16 gemessen werden. Die Steuerungseinrichtung 34 kann dann die Bereitstellungsverzögerung in Abhängigkeit des gemessenen Durchflusses berechnen, da die Zeitdauer, innerhalb welcher das Flüssigkeitsvolumen zwischen der Einspeisestelle 18 und den Ausbringelementen 20 ausgetauscht wird, von dem Durchfluss der Trägerflüssigkeit bzw. der Spritzflüssigkeit durch das Leitungssystem 16 abhängig ist.

Ferner kann während der Ausbringung der Spritzflüssigkeit auf die landwirtschaftliche Nutzfläche N die aktuelle Fahrgeschwindigkeit erfasst werden und bevorstehende Änderungen der Fahrgeschwindigkeit bis zum Erreichen der flächeninternen Applikationsgrenze, beispielsweise durch eine Auswertung einer geplanten Ausbringroutine, ermittelt werden. Die Steuerungseinrichtung 34 kann dann die Bereitstellungsverzögerungen in Abhängigkeit der erfassten aktuellen Fahrgeschwindigkeit und der ermittelten bevorstehenden Änderungen der Fahrgeschwindigkeit bis zum Erreichen der flächeninternen Applikationsgrenze G1, G2 berechnen.

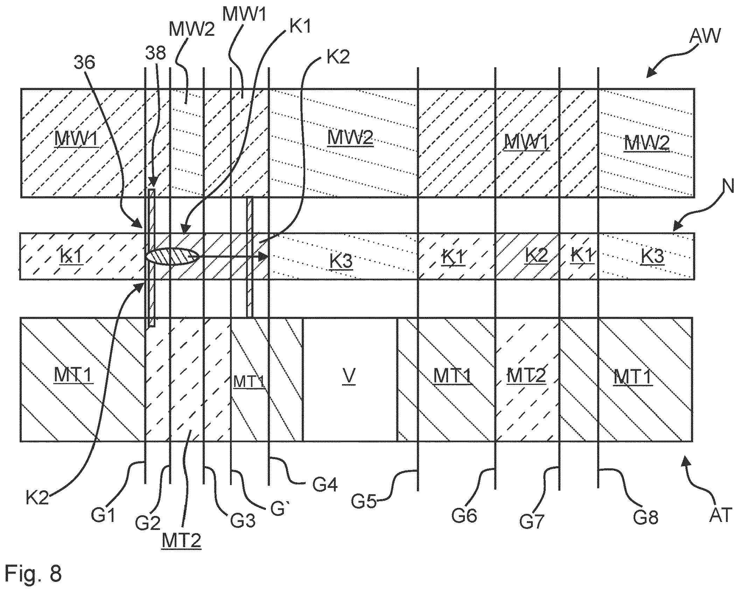

Die Fig. 8 zeigt einen Ausbringvorgang, bei welchem die Steuerungseinrichtung 34 Applikationskarten AW, AT berücksichtigt, wobei die Applikationskarte AW flächenspezifische Wirkstoffmengen vorgibt und die Applikationskarte AT flächenspezifische Trägerflüssigkeitsmengen vorgibt. Das ein Gestänge 38 aufweisende Spritzgerät 36 weist ein Direkteinspeisesystem 26 auf, welches zum Verändern der Wirkstoffkonzentration K1-K3 das Verhältnis der flächenbezogenen Ausbringmenge an Wirkstoff und der flächenbezogenen Ausbringmenge an Trägerflüssigkeit verändert.

Bis zur Applikationsgrenze G1 soll eine Spritzflüssigkeit mit der Wirkstoffkonzentration K1 ausgebracht werden. Diese Wirkstoffkonzentration K1 kann durch das Eindosieren der Wirkstoffsollmenge MW1 in eine Trägerflüssigkeitsollmenge MT1 erzeugt werden. Zwischen den Applikationsgrenzen G1 und G2 soll eine Spritzflüssigkeit mit der Wirkstoffkonzentration K2 ausgebracht werden. Diese Wirkstoffkonzentration K2 kann durch Eindosieren der Wirkstoffsollmenge MW1 in die Trägerflüssigkeitsollmenge MT2 erzeugt werden. Zwischen den Applikationsgrenzen G2 und G3 soll eine Spritzflüssigkeit mit der Wirkstoffkonzentration K1 ausgebracht werden. Diese Wirkstoffkonzentration K1 kann durch das Eindosieren der Wirkstoffsollmenge MW2 in die Trägerflüssigkeitsollmenge MT2 erzeugt werden. Zwischen den Applikationsgrenzen G3 und G4 soll eine Spritzflüssigkeit mit der Wirkstoffkonzentration K2 ausgebracht werden. Bis zur Applikationsgrenze G' wird die Spritzflüssigkeit mit der Wirkstoffkonzentration K2 über das Eindosieren der Wirkstoffmenge MW1 in die Trägerflüssigkeitsollmenge MT2 erzeugt. Zwischen den Applikationsgrenzen G' und G4 wird die Spritzflüssigkeit mit der Wirkstoffkonzentration K2 durch das Eindosieren der Wirkstoffsollmenge MW1 in die Trägerflüssigkeitsollmenge MT1 erzeugt.

Zwischen den Applikationsgrenzen G4 und G5 soll eine Spritzflüssigkeit mit der Wirkstoffkonzentration K3 ausgebracht werden. Die Wirkstoffkonzentration K3 wird durch Eindosieren der Wirkstoffsollmenge MW2 in die Trägerflüssigkeitsollmenge MT1 erzeugt. Hierbei wird auch berücksichtigt, dass das Spritzgerät 36 zwischen den flächeninternen Applikationsgrenzen G4 und G5 das Vorgewende V durchfährt.

Zwischen den Applikationsgrenzen G5 und G6 soll eine Spritzflüssigkeit mit der Wirkstoffkonzentration K1 ausgebracht werden. Diese Wirkstoffkonzentration K1 wird die das Eindosieren einer Wirkstoffsollmenge MW1 in eine Trägerflüssigkeitsollmenge MT1 erzeugt.

Frühzeitig vor den Applikationsgrenzen G6, G7 und G8 veranlasst die Steuerungseinrichtung 34 weitere Veränderungen der Wirkstoffkonzentration in der Spritzflüssigkeit, wobei die Veränderung der Wirkstoffkonzentration wieder über das Einstellen einer Wirkstoffsollmenge MW1, MW2 und/oder über das Einstellen einer Trägerflüssigkeitsollmenge MT1, MT2 erfolgt.

### Bezugszeichenliste

- 10: System
- 12: Hauptbehälter
- 14: Hauptpumpe
- 16: Leitungssystem
- 18: Einspeisestelle
- 19: Mischkammer
- 20: Ausbringelemente
- 22: Rückführleitung
- 24: Rückführventil
- 26: Direkteinspeisesystem
- 28: Wirkstoffbehälter
- 30: Einspeiseleitung
- 32: Einspeisepumpe
- 33: Durchflussmesseinrichtung
- 34: Steuerungseinrichtung
- 36: Spritzgerät
- 38: Gestänge

- A, AT, AW: Applikationskarten
- F: Fahrtrichtung
- G, G', G1-G8: Applikationsgrenzen
- K1, K2, K3: Wirkstoffkonzentrationen
- MW1, MW2: Wirkstoffsollmengen
- MT1, MT2: Trägerflüssigkeitssollmengen
- N: Nutzfläche
- O1, O2, O2': Anpassorte
- V: Vorgewende
- W1, W2, W2': Verzögerungswege
- ΔW2: Wegdifferenz
- S: Wegstrecke

## Patentansprüche

1. Verfahren zum Betreiben eines ein Direkteinspeisesystem (26) aufweisenden landwirtschaftlichen Spritzgeräts (36), mit den Schritten:
- Einspeisen eines Wirkstoffs in ein mit Ausbringelementen (20) verbundenes und eine Trägerflüssigkeit führendes Leitungssystem (16) des landwirtschaftlichen Spritzgeräts (36) mittels des Direkteinspeisesystems (26) zum Erzeugen einer den Wirkstoff und die Trägerflüssigkeit umfassenden Spritzflüssigkeit, wobei das Einspeisen des Wirkstoffs an einer Einspeisestelle (18) des Leitungssystems (16) erfolgt; und
- Verändern der Wirkstoffkonzentration (K1, K2, K3) der Spritzflüssigkeit durch Anpassen der Wirkstoffeinspeisung und/oder durch Anpassen des Volumenstroms der Trägerflüssigkeit an der Einspeisestelle (18);
**dadurch gekennzeichnet, dass** eine Steuerungseinrichtung (34) selbsttätig das Verändern der Wirkstoffkonzentration (K1, K2, K3) der Spritzflüssigkeit veranlasst, bevor die Ausbringelemente (20) eine innerhalb einer landwirtschaftlichen Nutzfläche (N) verlaufende flächeninterne Applikationsgrenze (G, G', G1-G8) erreichen, sodass die Spritzflüssigkeit mit der veränderten Wirkstoffkonzentration (K1, K2, K3) bei Erreichen der flächeninternen Applikationsgrenze (G, G', G1-G8) an einem oder mehreren Ausbringelementen (20) anliegt.

2. Verfahren nach Anspruch 1,
**dadurch gekennzeichnet, dass** die Steuerungseinrichtung (34) das Verändern der Wirkstoffkonzentration (K1, K2, K3) der Spritzflüssigkeit an einem Anpassort (O1, O2) auf der landwirtschaftlichen Nutzfläche (N) und/oder zu einem Anpasszeitpunkt während eines Ausbringvorgangs veranlasst und den Anpassort (O1, O2) und/oder den Anpasszeitpunkt unter Berücksichtigung einer dynamischen Bereitstellungsverzögerung der Spritzflüssigkeit mit der veränderten Wirkstoffkonzentration (K1, K2, K3) an dem einen oder den mehreren Ausbringelementen (20) ermittelt.

3. Verfahren nach Anspruch 2,
**dadurch gekennzeichnet, dass** die von der Steuerungseinrichtung (34) ermittelte Bereitstellungsverzögerung
- die Verzögerungszeit zwischen dem Anpasszeitpunkt und dem Zeitpunkt, an welchem das eine oder die mehreren Ausbringelemente (20) die flächeninterne Applikationsgrenze (G, G', G1-G8) erreichen, betrifft; oder
- den Verzögerungsweg (W1, W2, W2') zwischen dem Anpassort (O1, O2) und der flächeninternen Applikationsgrenze (G, G', G1-G8) betrifft.

4. Verfahren nach Anspruch 3,
**dadurch gekennzeichnet, dass** die Steuerungseinrichtung (34) den Verzögerungsweg (W1, W2, W2') unter Berücksichtigung eines Flüssigkeitsaustauschvolumens, einer flächenbezogenen Ausbringrate an Trägerflüssigkeit oder Spritzflüssigkeit und/oder der Arbeitsbreite des Spritzgeräts (36) bis zum Erreichen der flächeninternen Applikationsgrenze (G, G', G1-G8) berechnet.

5. Verfahren nach Anspruch 3 oder 4,
**dadurch gekennzeichnet, dass** die Steuerungseinrichtung (34) den Verzögerungsweg (W1, W2, W2') unter Berücksichtigung des Fahrwegs und entlang des Fahrwegs auftretenden Ausbringunterbrechungen bis zum Erreichen der flächeninternen Applikationsgrenze (G, G', G1-G8) berechnet.

6. Verfahren nach einem der Ansprüche 2 bis 5,
**gekennzeichnet durch** den Schritt:
- Messen des Durchflusses, insbesondere des Durchflussvolumenstroms und/oder der Strömungsgeschwindigkeit, der Trägerflüssigkeit und/oder der Spritzflüssigkeit durch das Leitungssystem (16) mittels einer oder mehrerer Durchflussmesseinrichtungen (33),
wobei die Steuerungseinrichtung (34) die Bereitstellungsverzögerung in Abhängigkeit des gemessenen Durchflusses berechnet.

7. Verfahren nach einem der Ansprüche 2 bis 6,
**gekennzeichnet durch** den Schritt:
- Ermitteln von bevorstehenden, insbesondere geplanten, Änderungen des Durchflusses, insbesondere des Durchflussvolumenstroms und/oder der Strömungsgeschwindigkeit, der Trägerflüssigkeit und/oder der Spritzflüssigkeit durch das Leitungssystem (16) bis zum Erreichen der flächeninternen Applikationsgrenze (G, G', G1-G8), insbesondere durch eine Auswertung einer geplanten Ausbringroutine,
wobei die Steuerungseinrichtung (34) die Bereitstellungsverzögerung in Abhängigkeit der ermittelten bevorstehenden Änderungen des Durchflusses der Trägerflüssigkeit und/oder der Spritzflüssigkeit durch das Leitungssystem (16) bis zum Erreichen der flächeninternen Applikationsgrenze (G, G', G1-G8) berechnet.

8. Verfahren nach einem der Ansprüche 2 bis 7,
**gekennzeichnet durch** zumindest einen der folgenden Schritte:
- Erfassen der aktuellen Fahrgeschwindigkeit;
- Ermitteln von bevorstehenden, insbesondere geplanten, Änderungen der Fahrgeschwindigkeit bis zum Erreichen der flächeninternen Applikationsgrenze (G, G', G1-G8), insbesondere durch eine Auswertung einer geplanten Ausbringroutine,
wobei die Steuerungseinrichtung (34) die Bereitstellungsverzögerung in Abhängigkeit der erfassten aktuellen Fahrgeschwindigkeit und/oder der ermittelten bevorstehenden Änderungen der Fahrgeschwindigkeit bis zum Erreichen der flächeninternen Applikationsgrenze (G, G', G1-G8) berechnet.

9. Verfahren nach einem der Ansprüche 2 bis 8,
**gekennzeichnet durch** zumindest einen der folgenden Schritte:
- Erfassen der aktuellen Sollausbringmenge an Trägerflüssigkeit und/oder Spritzflüssigkeit;
- Ermitteln von bevorstehenden, insbesondere geplanten, Änderungen der Sollausbringmenge an Trägerflüssigkeit und/oder Spritzflüssigkeit bis zum Erreichen der flächeninternen Applikationsgrenze (G, G', G1-G8), insbesondere durch eine Auswertung einer geplanten Ausbringroutine,
wobei die Steuerungseinrichtung (34) die Bereitstellungsverzögerung in Abhängigkeit der erfassten aktuellen Sollausbringmenge an Trägerflüssigkeit und/oder Spritzflüssigkeit und/oder den ermittelten bevorstehenden Änderungen der Sollausbringmenge an Trägerflüssigkeit und/oder Spritzflüssigkeit berechnet.

10. Verfahren nach einem der Ansprüche 2 bis 9,
**gekennzeichnet durch** zumindest einen der folgenden Schritte:
- Erfassen der Anzahl an aktiven Ausbringelementen (20) und/oder der Position der aktiven Ausbringelemente (20) in dem Leitungssystem (16),
- Ermitteln von bevorstehenden, insbesondere geplanten, Änderungen hinsichtlich der Anzahl an aktiven Ausbringelementen (20) und/oder der Position der aktiven Ausbringelemente (20) in dem Leitungssystem (16) bis zum Erreichen der flächeninternen Applikationsgrenze (G, G', G1-G8), insbesondere durch eine Auswertung einer geplanten Ausbringroutine,
wobei die Steuerungseinrichtung (34) die Bereitstellungsverzögerung in Abhängigkeit der erfassten Anzahl an aktiven Ausbringelemente (20) und/oder der Positionen der aktiven Ausbringelemente (20) in dem Leitungssystem (16) und/oder der bevorstehenden Änderungen hinsichtlich der Anzahl an aktiven Ausbringelementen (20) und/oder der Positionen der aktiven Ausbringelemente (20) in dem Leitungssystem (16) bis zum Erreichen der flächeninternen Applikationsgrenze (G, G', G1-G8) berechnet.

11. Verfahren nach einem der Ansprüche 2 bis 10,
**dadurch gekennzeichnet, dass** die flächeninterne Applikationsgrenze (G, G', G1-G8), der Anpassort (O1, O2), der Anpasszeitpunkt, die Bereitstellungsverzögerung, insbesondere als Verzögerungszeit oder Verzögerungsweg (W1, W2, W2'), mittels einer elektronischen Anzeigeeinrichtung, insbesondere im Zusammenhang mit einer Kartenansicht, visualisiert werden.

12. Verfahren nach einem der Ansprüche 2 bis 11,
**dadurch gekennzeichnet, dass** die Spritzflüssigkeit mit der veränderten Wirkstoffkonzentration (K1, K2, K3) die Ausbringelemente (20) des Spritzgeräts (36) aufgrund voneinander abweichender zu den Ausbringelementen (20) führender Leitungslängen zeitlich beabstandet erreicht, wobei die Steuerungseinrichtung (34) eine ermittelte Bereitstellungsverzögerung zur Anpassung der Überdeckung zwischen Soll-Ausbringfläche für die Spritzflüssigkeit mit der geänderten Wirkstoffkonzentration (K1, K2, K3) und Ist-Ausbringfläche der Spritzflüssigkeit mit der geänderten Wirkstoffkonzentration (K1, K2, K3) manipuliert.

13. Verfahren nach Anspruch 12,
**dadurch gekennzeichnet, dass** die Steuerungseinrichtung (34) die Bereitstellungsverzögerung bei einer Erhöhung der Wirkstoffkonzentration (K1, K2, K3) anders manipuliert als bei einer Verringerung der Wirkstoffkonzentration (K1, K2, K3).

14. System (10) zum Steuern der Ausbringung von Spritzflüssigkeit durch ein landwirtschaftliches Spritzgerät (36), mit
- einem Direkteinspeisesystem (26), mittels welchem ein Wirkstoff in ein mit Ausbringelementen (20) verbundenes und eine Trägerflüssigkeit führendes Leitungssystem (16) des landwirtschaftlichen Spritzgeräts (36) einspeisbar ist, um eine den Wirkstoff und die Trägerflüssigkeit umfassende Spritzflüssigkeit zu erzeugen, wobei das Direkteinspeisesystem (26) dazu eingerichtet ist, den Wirkstoff an einer Einspeisestelle (18) des Leitungssystems (16) einzuspeisen; und
- einer Steuerungseinrichtung (34), welche dazu eingerichtet ist, ein Verändern der Wirkstoffkonzentration (K1, K2, K3) der Spritzflüssigkeit durch Anpassen der Wirkstoffeinspeisung und/oder durch Anpassen des Volumenstroms der Trägerflüssigkeit an der Einspeisestelle (18) zu veranlassen;
**dadurch gekennzeichnet, dass** die Steuerungseinrichtung (34) dazu eingerichtet ist, selbsttätig das Verändern der Wirkstoffkonzentration (K1, K2, K3) der Spritzflüssigkeit zu veranlassen, bevor die Ausbringelemente (20) eine innerhalb einer landwirtschaftlichen Nutzfläche (N) verlaufende flächeninterne Applikationsgrenze (G, G', G1-G8) erreichen, sodass die Spritzflüssigkeit mit der veränderten Wirkstoffkonzentration (K1, K2, K3) bei Erreichen der flächeninternen Applikationsgrenze (G, G', G1-G8) an einem oder mehreren Ausbringelementen (20) anliegt.

15. System (10) nach Anspruch 14,
**dadurch gekennzeichnet, dass** das System (10) dazu eingerichtet ist, das Direkteinspeisesystem (26) gemäß einem Verfahren nach einem der Ansprüche 1 bis 13 zu betreiben.

## Claims

1. Method for operating an agricultural sprayer apparatus (36) which has a direct infeed system (26), comprising the steps of:
- feeding an active ingredient into a line system (16) of the agricultural sprayer apparatus (36), which system is connected to spreading elements (20) and guides a carrier liquid, by means of the direct infeed system (26) to produce a spray liquid comprising the active ingredient and the carrier liquid, the active ingredient being fed in at an infeed point (18) of the line system (16); and
- changing the active ingredient concentration (K1, K2, K3) of the spray liquid by adjusting the active ingredient infeed and/or by adjusting the volume flow rate of the carrier liquid at the infeed point (18);
**characterized in that** a control device (34) automatically causes the active ingredient concentration (K1, K2, K3) of the spray liquid to change before the spreading elements (20) reach an area-internal application boundary (G, G', G1-G8) extending within an agricultural area (N), so that the spray liquid with the changed active ingredient concentration (K1, K2, K3) is applied to one or more spreading elements (20) when the area-internal application boundary (G, G', G1-G8) is reached.

2. Method according to claim 1,
**characterized in that** the control device (34) causes the active ingredient concentration (K1, K2, K3) of the spray liquid to change at an adjustment location (O1, O2) on the agricultural area (N) and/or at an adjustment time during a spreading process and determines the adjustment location (O1, O2) and/or the adjustment time taking into account a dynamic provision delay of the spray liquid with the changed active ingredient concentration (K1, K2, K3) at the one or more spreading elements (20).

3. Method according to claim 2,
**characterized in that** the provision delay determined by the control device (34)
- relates to the delay time between the adjustment time and the time at which the one or more spreading elements (20) reach the area-internal application boundary (G, G', G1-G8); or
- relates to the delay path (W1, W2, W2') between the adjustment location (O1, O2) and the area-internal application boundary (G, G', G1-G8).

4. Method according to claim 3,
**characterized in that** the control device (34) calculates the delay path (W1, W2, W2') taking into account a liquid exchange volume, an area-related spreading rate of carrier liquid or spray liquid and/or the working width of the sprayer apparatus (36) until the area-internal application boundary (G, G', G1-G8) is reached.

5. Method according to claim 3 or 4,
**characterized in that** the control device (34) calculates the delay path (W1, W2, W2') taking into account the travel path and spreading interruptions occurring along the travel path until the area-internal application boundary (G, G', G1-G8) is reached.

6. Method according to any of claims 2 to 5,
**characterized by** the step of:
- measuring the flow, in particular the flow volume rate and/or the flow velocity, of the carrier liquid and/or the spray liquid through the line system (16) by means of one or more flow measuring devices (33),
the control device (34) calculating the provision delay on the basis of the measured flow.

7. Method according to any of claims 2 to 6,
**characterized by** the step of:
- determining impending, in particular planned, changes in the flow, in particular the flow volume rate and/or the flow velocity, of the carrier liquid and/or the spray liquid through the line system (16) until the area-internal application boundary (G, G', G1-G8) is reached, in particular by evaluating a planned spreading routine,
the control device (34) calculating the provision delay on the basis of the determined impending changes in the flow of the carrier liquid and/or the spray liquid through the line system (16) until the area-internal application boundary (G, G', G1-G8) is reached.

8. Method according to any of claims 2 to 7,
**characterized by** at least one of the following steps:
- detecting the current driving speed;
- determining impending, in particular planned, changes in the driving speed until the area-internal application boundary (G, G', G1-G8) is reached, in particular by evaluating a planned spreading routine,
the control device (34) calculating the provision delay on the basis of the detected current driving speed and/or the determined impending changes in the driving speed until the area-internal application boundary (G, G', G1-G8) is reached.

9. Method according to any of claims 2 to 8,
**characterized by** at least one of the following steps:
- detecting the current target spreading rate of carrier liquid and/or spray liquid;
- determining impending, in particular planned, changes in the target spreading rate of carrier liquid and/or spray liquid until the area-internal application boundary (G, G', G1-G8) is reached, in particular by evaluating a planned spreading routine,
the control device (34) calculating the provision delay on the basis of the detected current target spreading rate of carrier liquid and/or spray liquid and/or the determined impending changes in the target spreading rate of carrier liquid and/or spray liquid.

10. Method according to any of claims 2 to 9,
**characterized by** at least one of the following steps:
- detecting the number of active spreading elements (20) and/or the position of the active spreading elements (20) in the line system (16),
- determining impending, in particular planned, changes with regard to the number of active spreading elements (20) and/or the position of the active spreading elements (20) in the line system (16) until the area-internal application boundary (G, G', G1-G8) is reached, in particular by evaluating a planned spreading routine,
the control device (34) calculating the provision delay on the basis of the detected number of active spreading elements (20) and/or the positions of the active spreading elements (20) in the line system (16) and/or the impending changes with regard to the number of active spreading elements (20) and/or the positions of the active spreading elements (20) in the line system (16) until the area-internal application boundary (G, G', G1-G8) is reached.

11. Method according to any of claims 2 to 10,
**characterized in that** the area-internal application boundary (G, G', G1-G8), the adjustment location (O1, O2), the adjustment time, the provision delay, are visualized, in particular as delay time or delay path (W1, W2, W2'), by means of an electronic display device, in particular in connection with a map view.

12. Method according to any of claims 2 to 11,
**characterized in that** the spray liquid with the changed active ingredient concentration (K1, K2, K3) reaches the spreading elements (20) of the sprayer apparatus (36) at different times due to different line lengths leading to the spreading elements (20), the control device (34) manipulating a determined provision delay to adjust the overlap between the target spreading area for the spray liquid with the changed active ingredient concentration (K1, K2, K3) and the actual spreading area of the spray liquid with the changed active ingredient concentration (K1, K2, K3).

13. Method according to claim 12,
**characterized in that** the control device (34) manipulates the provision delay differently when the active ingredient concentration (K1, K2, K3) is increased than when the active ingredient concentration (K1, K2, K3) is decreased.

14. System (10) for controlling the spreading of spray liquid by an agricultural sprayer apparatus (36), comprising
- a direct infeed system (26) by means of which an active ingredient can be fed into a line system (16) of the agricultural sprayer apparatus (36), which system is connected to spraying elements (20) and guides a carrier liquid, in order to produce a spray liquid comprising the active ingredient and the carrier liquid, the direct infeed system (26) being designed to feed in the active ingredient at an infeed point (18) of the line system (16); and
- a control device (34) which is designed to cause a change in the active ingredient concentration (K1, K2, K3) of the spray liquid by adjusting the active ingredient infeed and/or by adjusting the volume flow rate of the carrier liquid at the infeed point (18);
**characterized in that** the control device (34) is designed to automatically cause the active ingredient concentration (K1, K2, K3) of the spray liquid to change before the spreading elements (20) reach an area-internal application boundary (G, G', G1-G8) extending within an agricultural area (N), so that the spray liquid with the changed active ingredient concentration (K1, K2, K3) is applied to one or more spreading elements (20) when the area-internal application boundary (G, G', G1-G8) is reached.

15. System (10) according to claim 14,
**characterized in that** the system (10) is designed to operate the direct infeed system (26) according to a method according to any of claims 1 to 13.

## Revendications

1. Procédé permettant de faire fonctionner un appareil de pulvérisation (36) agricole présentant un système d'injection directe (26), comportant les étapes consistant à :
- injecter, à l'aide du système d'injection directe (26), une substance active dans un système de conduites (16) de l'appareil de pulvérisation (36) agricole pour la production d'un liquide de pulvérisation comprenant la substance active et le liquide porteur, lequel système de conduites est relié à des éléments d'épandage (20) et conduit un liquide porteur, dans lequel l'injection de la substance active s'effectue en un point d'injection (18) du système de conduites (16) ; et
- modifier la concentration en substance active (K1, K2, K3) du liquide de pulvérisation par adaptation de l'injection de substance active et/ou par adaptation du débit volumétrique du liquide porteur au point d'injection (18) ;
**caractérisé en ce qu'**un dispositif de commande (34) provoque automatiquement la modification de la concentration en substance active (K1, K2, K3) du liquide de pulvérisation avant que les éléments d'épandage (20) n'atteignent une limite d'application (G, G', G1-G8) interne à la surface et s'étendant à l'intérieur d'une surface agricole utile (N), de sorte que le liquide de pulvérisation dont la concentration en substance active (K1, K2, K3) est modifiée s'applique à un ou plusieurs éléments d'épandage (20) lorsque la limite d'application (G, G', G1-G8) interne à la surface est atteinte.

2. Procédé selon la revendication 1,
**caractérisé en ce que** le dispositif de commande (34) entraîne la modification de la concentration en substance active (K1, K2, K3) du liquide de pulvérisation à un emplacement d'adaptation (O1, O2) sur la surface agricole utile (N) et/ou à un moment d'adaptation lors d'une opération d'épandage, et détermine l'emplacement d'adaptation (O1, O2) et/ou le moment d'adaptation en tenant compte d'un délai dynamique de mise à disposition du liquide de pulvérisation comportant la concentration en substance active (K1, K2, K3) modifiée sur l'un ou les nombreux éléments d'épandage (20).

3. Procédé selon la revendication 2,
**caractérisé en ce que** le délai de mise à disposition déterminé par le dispositif de commande (34)
- concerne le délai entre le moment d'adaptation et le moment où l'élément ou les éléments d'épandage (20) atteignent la limite d'application (G, G', G1-G8) interne à la surface ; ou
- concerne la course de décélération (W1, W2, W2') entre l'emplacement d'adaptation (O1, O2) et la limite d'application (G, G', G1-G8) interne à la surface.

4. Procédé selon la revendication 3,
**caractérisé en ce que** le dispositif de commande (34) calcule la course de décélération (W1, W2, W2') en tenant compte d'un volume d'échange de liquide, d'un taux d'épandage de liquide porteur ou de liquide de pulvérisation lié à la surface et/ou de la largeur de travail de l'appareil de pulvérisation (36) jusqu'à ce que la limite d'application (G, G', G1-G8) interne à la surface soit atteinte.

5. Procédé selon la revendication 3 ou 4,
**caractérisé en ce que** le dispositif de commande (34) calcule la course de décélération (W1, W2, W2') en tenant compte de du sillon et des interruptions d'épandage se produisant le long du sillon jusqu'à ce que la limite d'application (G, G', G1-G8) interne à la surface soit atteinte.

6. Procédé selon l'une des revendications 2 à 5,
**caractérisé par** l'étape consistant à :
- mesurer le débit, en particulier le flux de débit volumétrique et/ou la vitesse d'écoulement, du liquide porteur et/ou du liquide de pulvérisation à travers le système de conduites (16) à l'aide d'un ou de plusieurs dispositifs de mesure de débit (33),
dans lequel le dispositif de commande (34) calcule le délai de mise à disposition en fonction du débit mesuré.

7. Procédé selon l'une des revendications 2 à 6,
**caractérisé par** l'étape consistant à :
- déterminer des modifications imminentes, en particulier planifiées, du débit, en particulier du flux de débit volumétrique et/ou de la vitesse d'écoulement, du liquide porteur et/ou du liquide de pulvérisation grâce au système de conduites (16) jusqu'à ce que la limite d'application (G, G', G1-G8) interne à la surface soit atteinte, en particulier grâce à une évaluation d'une routine d'épandage planifiée,
dans lequel le dispositif de commande (34) calcule le délai de mise à disposition en fonction des modifications imminentes déterminées du débit du liquide porteur et/ou du liquide de pulvérisation grâce au système de conduites (16) jusqu'à ce que la limite d'application (G, G', G1-G8) interne à la surface soit atteinte.

8. Procédé selon l'une des revendications 2 à 7,
**caractérisé par** au moins l'une des étapes suivantes :
- enregistrement de la vitesse de déplacement actuelle ;
- détermination de modifications imminentes, en particulier planifiées, de la vitesse de déplacement jusqu'à ce que la limite d'application (G, G', G1-G8) interne à la surface soit atteinte, en particulier grâce à une évaluation d'une routine d'épandage planifiée,
dans lequel le dispositif de commande (34) calcule le délai de mise à disposition en fonction de la vitesse de déplacement actuelle enregistrée et/ou des modifications imminentes déterminées de la vitesse de déplacement jusqu'à ce que la limite d'application (G, G', G1-G8) interne à la surface soit atteinte.

9. Procédé selon l'une des revendications 2 à 8,
**caractérisé par** au moins l'une des étapes suivantes :
- enregistrement de la quantité d'épandage de consigne actuelle de liquide porteur et/ou de liquide de pulvérisation ;
- détermination de modifications imminentes, en particulier planifiées, de la quantité d'épandage de consigne de liquide porteur et/ou de liquide de pulvérisation jusqu'à ce que la limite d'application (G, G', G1-G8) interne à la surface soit atteinte, en particulier grâce à une évaluation d'une routine d'épandage planifiée,
dans lequel le dispositif de commande (34) calcule le délai de mise à disposition en fonction de la quantité d'épandage de consigne actuelle enregistrée de liquide porteur et/ou de liquide de pulvérisation et/ou des modifications imminentes déterminées de la quantité d'épandage de consigne de liquide porteur et/ou de liquide de pulvérisation.

10. Procédé selon l'une des revendications 2 à 9,
**caractérisé par** au moins l'une des étapes suivantes :
- enregistrement du nombre d'éléments d'épandage (20) actifs et/ou de la position des éléments d'épandage (20) actifs dans le système de conduites (16),
- détermination de modifications imminentes, en particulier planifiées, concernant le nombre d'éléments d'épandage (20) actifs et/ou de la position des éléments d'épandage (20) actifs dans le système de conduites (16) jusqu'à ce que la limite d'application (G, G', G1-G8) interne à la surface soit atteinte, en particulier grâce à une évaluation d'une routine d'épandage planifiée,
dans lequel le dispositif de commande (34) calcule le délai de mise à disposition en fonction du nombre enregistré d'éléments d'épandage (20) actifs et/ou des positions des éléments d'épandage (20) actifs dans le système de conduites (16) et/ou des modifications imminentes concernant le nombre d'éléments d'épandage (20) actifs et/ou les positions des éléments d'épandage (20) actifs dans le système de conduites (16) jusqu'à ce que la limite d'application (G, G', G1-G8) interne à la surface soit atteinte.

11. Procédé selon l'une des revendications 2 à 10,
**caractérisé en ce que** la limite d'application (G, G', G1-G8) interne à la surface, l'emplacement d'adaptation (O1, O2), le moment d'adaptation, le délai de mise à disposition, en particulier sous forme de délai ou de course de décélération (W1, W2, W2'), sont visualisés à l'aide d'un dispositif d'affichage électronique, en particulier en lien avec un affichage cartographique.

12. Procédé selon l'une des revendications 2 à 11,
**caractérisé en ce que** le liquide de pulvérisation comportant la concentration en substance active (K1, K2, K3) modifiée atteint les éléments d'épandage (20) de l'appareil de pulvérisation (36) avec un décalage dans le temps en raison de longueurs de conduites différentes les unes des autres et menant aux éléments d'épandage (20), dans lequel le dispositif de commande (34) manipule un délai de mise à disposition déterminé pour l'adaptation le recouvrement entre la surface d'épandage de consigne pour le liquide de pulvérisation comportant la concentration en substance active (K1, K2, K3) modifiée et la surface d'épandage réelle du liquide de pulvérisation comportant la concentration en substance active (K1, K2, K3) modifiée.

13. Procédé selon la revendication 12,
**caractérisé en ce que** le dispositif de commande (34) manipule le délai de mise à disposition différemment lors d'une augmentation de la concentration en substance active (K1, K2, K3) que lors d'une diminution de la concentration en substance active (K1, K2, K3).

14. Système (10) permettant de commander l'épandage d'un liquide de pulvérisation grâce à un appareil de pulvérisation (36) agricole, comportant
- un système d'injection directe (26), à l'aide duquel une substance active peut être injectée dans un système de conduites (16) de l'appareil de pulvérisation (36) agricole, lequel système de conduites est relié à des éléments d'épandage (20) et conduit un liquide porteur, afin de produire un liquide de pulvérisation comprenant la substance active et le liquide porteur, dans lequel le système d'injection directe (26) est conçu pour injecter la substance active en un point d'injection (18) du système de conduites (16) ; et
- un dispositif de commande (34) qui est conçu pour entraîner une modification de la concentration en substance active (K1, K2, K3) du liquide de pulvérisation par adaptation de l'injection de substance active et/ou par adaptation du débit volumétrique du liquide porteur au point d'injection (18) ;
**caractérisé en ce que** le dispositif de commande (34) est conçu pour entraîner automatiquement la modification de la concentration en substance active (K1, K2, K3) du liquide de pulvérisation avant que les éléments d'épandage (20) n'atteignent une limite d'application (G, G', G1-G8) interne à la surface et s'étendant à l'intérieur d'une surface agricole utile (N), de sorte que le liquide de pulvérisation comportant la concentration en substance active (K1, K2, K3) modifiée s'applique à un ou plusieurs éléments d'épandage (20) lorsque la limite d'application (G, G', G1-G8) interne à la surface est atteinte.

15. Système (10) selon la revendication 14,
**caractérisé en ce que** le système (10) est configuré pour faire fonctionner le système d'injection directe (26) conformément à un procédé selon l'une des revendications 1 à 13.
